Europäisches Patentamt

European Patent Office

Office européen des brevets

(19)

(11) Veröffentlichungsnummer: **0 008 035**
**B1**

(12) **EUROPÄISCHE PATENTSCHRIFT**

(45) Veröffentlichungstag der Patentschrift:
**07.09.83**

(21) Anmeldenummer: **79102612.3**

(22) Anmeldetag: **24.07.79**

(51) Int. Cl.³: **H 04 L 25/06**, H 03 K 5/08

(54) Regenerator für gleichstrombehaftete Digitalsignale.

(30) Priorität: **04.08.78 DE 2834193**

(43) Veröffentlichungstag der Anmeldung:
**20.02.80 Patentblatt 80/4**

(45) Bekanntmachung des Hinweises auf die Patenterteilung:
**07.09.83 Patentblatt 83/36**

(84) Benannte Vertragsstaaten:
**AT CH DE FR GB IT NL SE**

(56) Entgegenhaltungen:
**CH-A-509 015**
**DE-B-2 011 849**
**US-A-1 717 116**

(73) Patentinhaber: **Felten & Guilleaume Fernmeldeanlagen GmbH, Thurn-und-Taxis-Strasse 10 Postfach 4943, D-8500 Nürnberg 10 (DE)**

(72) Erfinder: **Fahrendholz, Joachim, Odenwaldring 47, D-6101 Gross-Bieberau (DE)**

(74) Vertreter: **Peuckert, Hermann, Philips Patentverwaltung GmbH Postfach 10 02 29 Steindamm 94, D-2000 Hamburg 1 (DE)**

BUNDESDRUCKEREI BERLIN

## Regenerator für gleichstrombehaftete Digitalsignale

Die Erfindung betrifft einen Regenerator für gleichstrombehaftete Digitalsignale mit einem Amplitudenentscheider, einem nachgeschalteten Zeitentscheider und einem daran angeschlossenen Rückkopplungsnetzwerk, das an eine vor dem Amplitudenentscheider angeordnete Additionsschaltung wechselstrommäßig angekoppelt ist.

Bei der Übertragung von beispielsweise im Binärcode codierten Digitalsignalen, im folgenden Binärsignale genannt, werden wegen der im Übertragungsweg liegenden Übertrager und Koppelkondensatoren die Spektralanteile im Leistungsspektrum bei tiefen Frequenzen bedämpft und der Gleichstromanteil geht verloren, vgl. K. Tröndle; R. Weiß: »Einführung in die Puls-Code-Modulation«, R. Oldenbourgh Verlag, München—Wien, 1974, Seiten 136 bis 139. Bei der Regenerierung werden diese Spektralanteile am Amplitudenentscheider jedoch in vollem Umfang wieder benötigt, weil sonst nach längeren Folgen mit einer überwiegenden Anzahl von Zeichen der gleichen Polarität der Mittelwert zwischen der positiven und der negativen Maximalamplitude sich so weit gegen die auf einem festen Potential liegende Entscheiderschwelle verschiebt, daß eine fehlerfreie Amplitudenentscheidung nicht mehr möglich ist.

Es ist seit langem bekannt, diese bedämpften Spektralanteile des Binärsignals einschließlich des verlorengegangenen Gleichstroms mit der sogenannten quantisierten Rückkopplung additiv dem Binärsignal wieder zuzufügen (beispielsweise US-PS 1 717 116 oder DE-B-2 011 849). Eine solche gleichstromgekoppelte Rückführung hat jedoch den Nachteil, daß sich die hierbei erforderlichen Gleichspannungspegel leicht durch Temperatur- oder andere Einflüsse verändern können. Darüber hinaus sind relativ schwierige und aufwendige Abgleicharbeiten erforderlich.

Diese Nachteile werden zwar vermieden durch eine bekannte wechselstromgekoppelte Rückführung, vgl. F. D. Waldhauer: »Quantized feedback in an experimental 280-Mbit/s digital repeater for coaxial transmission«, IEEE Transactions on Comm., Vol. COM-22, 1974, Seiten 1 bis 5; hierbei werden jedoch nicht die gesamten fehlenden Spektralanteile zurückgeführt, wodurch die maximale Anzahl der ununterbrochen hintereinander regenerierbaren gleichartigen Zeichen sehr klein (<6 : 100) im Vergleich zu der in der Taktrückgewinnungsschaltung noch synchronisierbaren Anzahl gleichartiger Zeichen ist.

Treten z. B. in einer Quasi-Zufallsfolge einige Hundert »Einsen« oder »Nullen« unmittelbar aufeinanderfolgend auf, so wird das Gleichgewicht zwischen der Anzahl der »Einsen« und »Nullen« gestört. Die bedämpften und verlorengegangenen Spektralanteile bewirken, daß das empfangene Binärsignal entsprechend der ungleichen Zeichenverteilung zu höheren oder geringeren Spannungswerten in bezug auf den Schwellwert des Amplitudenentscheiders driftet. Diese Drift ist um so größer, je ungleicher das Verhältnis der Anzahl der »Einsen« zur Anzahl der »Nullen« ist und diese Drift ist unabhängig von der Größe des erst im Rückkopplungsweg liegenden Kondensators, der die Wechselstromkopplung bewirkt. Dieser Kondensator verhindert andererseits, daß die Drift auf Dauer ausgeglichen werden kann.

Die Aufgabe der Erfindung ist es, eine Anordnung zu schaffen, welche die Vorteile der wechselstromgekoppelten Rückkopplung aufweist, wobei aber deren Nachteile so gering gehalten werden, daß sie im allgemeinen nicht mehr ins Gewicht fallen.

Diese Aufgabe wird dadurch gelöst, daß dem Rückkopplungsnetzwerk ein zusätzliches Rückkopplungsnetzwerk parallelgeschaltet ist, das an die Additionsschaltung galvanisch und an den Zeitentscheider wechselstrommäßig angekoppelt ist, und eine Spannung liefert, die der Anzahl der aufeinanderfolgenden Zeichen gleicher Polarität entspricht, derart, daß die bei der Übertragung sehr langer Folgen von Zeichen gleicher Polarität auftretenden Spektralanteile sehr niedriger Frequenzen selektiv zurückgewonnen werden.

Eine vorteilhafte Ausgestaltung der Erfindung ist im Unteranspruch angegeben.

Eine solche Anordnung ist aus der CH-PS 509 015 an sich bekannt. Jedoch ist dort die Schaltungsanordnung so dimensioniert, daß sie als Spitzenwertgleichrichter wirkt. Das erfindungsgemäß parallelgeschaltete zusätzliche Rückkopplungsnetzwerk gewinnt dagegen eine Spannung, die der Anzahl der aufeinanderfolgenden Digitalzeichen gleicher Polarität entspricht und dem Digitalsignal vor dem Eingang des Amplitudenentscheiders zuaddiert wird und somit der Drift des Digitalsignals entgegenwirkt.

Mit einem Binärsignale verarbeitenden Regenerator, der gemäß der Erfindung mit einem zusätzlichen Rückkopplungsnetzwerk ausgestattet ist, lassen sich beispielsweise — wie ein Übertragungsversuch zeigt — über ein 8,2 km langes Klein-Koaxialkabel mit einer Bitrate von 8,448 Mbit/s und mit einem quasi-statistischen Bitmuster der Länge $(2^{15}-1)$ bit eintausend »Nullen« oder »Einsen« einblenden, ohne daß Fehler auftreten. Dagegen können ohne die Schaltung gemäß der Erfindung unter sonst gleichen Bedingungen nur etwa sechzig »Nullen« eingeblendet werden, ohne daß Fehler entstehen.

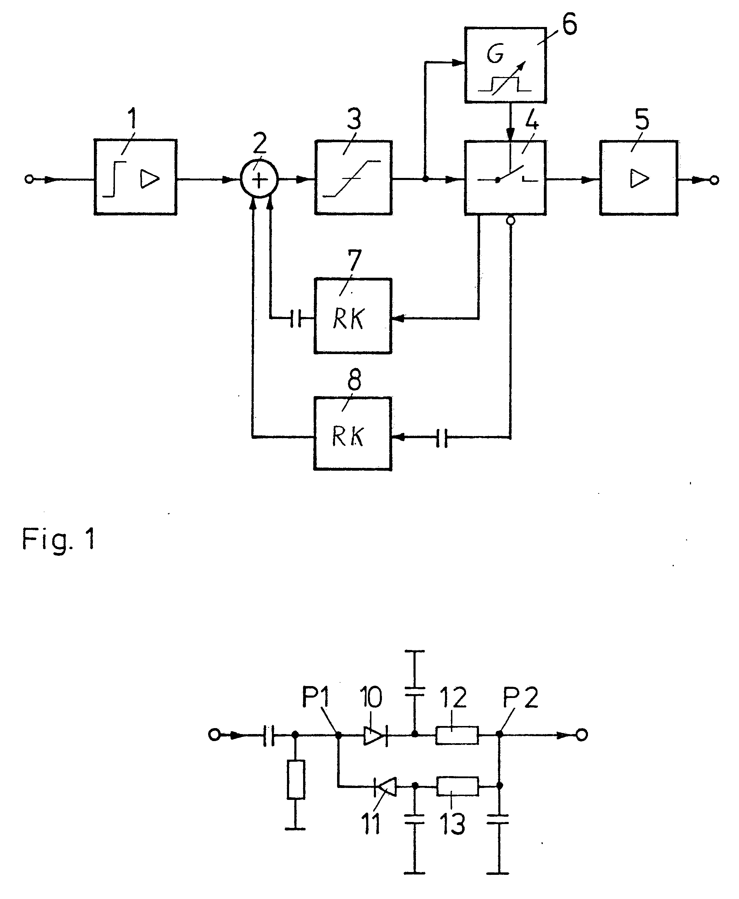

Ein Ausführungsbeispiel der Erfindung wird im folgenden anhand von Fig. 1 und 2 näher beschrieben, wobei sich diese Beschreibung auf binäre Digitalsignale beschränkt.

Fig. 1 zeigt das Blockschaltbild eines Regenerators mit dem zusätzlichen Rückkopplungsnetzwerk nach der Erfindung;

Fig. 2 zeigt ein Ausführungsbeispiel dieses zusätzlichen Rückkopplungsnetzwerks.

Nach Fig. 1 enthält der Regenerator in bekannter Weise an seinem Eingang ein Empfangsnetzwerk 1, welches das aus der Übertragungsstrecke bedämpfte und verzerrt ankommende Binärsignal verstärkt und entzerrt. Das so entzerrte Binärsignal wird über eine Additionsschaltung 2 einem Amplitudenentscheider 3 zugeführt. Ein jitterfreies Binärsignal steht erst am Ausgang eines Zeitentscheiders 4 zur Verfügung, der den zur Zeitentscheidung benötigten Takt von einer Taktrückgewinnungsschaltung 6 erhält. Das nunmehr jitterfreie Binärsignal gelangt über einen Verstärker 5 an den Ausgang des Regenerators. Das Signal für die Rückkopplung nach dem Stand der Technik wird vom Binärsignal im Zeitentscheider 4 abgezweigt, in einer quantisierten Rückkopplungsschaltung 7 integriert und über einen in Fig. 1 nicht näher bezeichneten Kondensator in der Additionsschaltung 2 dem Ausgangssignal des Eingangsnetzwerks 1 zugeführt.

Ein erfindungsgemäß vorgesehenes zusätzliches Rückkopplungsnetzwerk 8 erhält das dem Zeitentscheider 4 negiert entnommene Binärsignal über eine Wechselstromkopplung (Kondensator) und gewinnt die sehr tieffrequenten Spektralanteile des Binärsignals zurück, die sonst bei wechselstromgekoppelter Rückkopplung nach dem Stand der Technik durch den zwischen dem Rückkopplungsnetzwerk 7 und der Additionsschaltung 2 liegenden Kondensator bedämpft sind bzw. verlorengehen. Diese in dem zusätzlichen Rückkopplungsnetzwerk 8 zurückgewonnenen tieffrequenten Spektralanteile werden in der Additionsschaltung 2 ebenfalls dem vom Eingangsnetzwerk 1 kommenden Binärsignal zuaddiert.

Die in Fig. 2 gezeigte Schaltung des zusätzlichen Rückkopplungsnetzwerks besteht im wesentlichen aus zwei antiparallel geschalteten Dioden 10, 11 mit je einem Ladekondensator und aus zwei Widerständen 12, 13, welche als Additionswiderstände für die beiden Gleichrichtungsnetzzweige wirken. Ein weiterer Kondensator am Eingang des Netzwerks, dem Schaltungspunkt P1, dient der Signaleinkopplung, während ein Kondensator am Schaltungspunkt P2 als Glättungskondensator für die in dem Netzwerk erzeugte Spannung wirkt. Zur Arbeitspunktfestlegung dieses zusätzlichen Rückkopplungsnetzwerks ist am Schaltungspunkt P1 ein Widerstand angeschaltet.

Das dem Zeitentscheider 4 negiert entnommene Binärsignal liegt am Schaltungspunkt P1 als eine um Null symmetrische Rechteckspannung an, wenn das Binärsignal gleich viele »Nullen« und »Einsen« enthält.

Die Dioden 10, 11 richten die positiven und negativen Spannungsanteile dieser Rechteckspannung getrennt gleich. Hinter jeder der beiden Dioden 10, 11 stellt sich der gleiche Spannungspegel entsprechend dem positiven oder negativen Spannungswert der Rechteckspannung ein, jedoch sind die Vorzeichen der Spannung vertauscht. Die beiden Widerstände 12, 13 addieren diese Spannungen. In dem obengenannten Fall, daß die Anzahl der »Nullen« und »Einsen« gleich ist, heben sich die Spannungen am Schaltungspunkt P2 auf.

Wird die Anzahl der »Nullen« und die der »Einsen« ungleich, so wird sich das Signal am Schaltungspunkt P1, je nachdem, ob die Anzahl der »Nullen« oder die der »Einsen« überwiegt, mehr unter oder mehr über den Nullpegel verschieben, weil sich oberhalb des Nullpegels die gleiche Spannungs-Zeit-Fläche einstellt wie unterhalb. Die Beträge der Spannung hinter den Dioden 10, 11 sind dadurch ungleich und am Schaltungspunkt P2 ergibt sich nach der Addition durch die Widerstände 12, 13 eine Spannung, die proportional dem »Null«/»Eins«-Verhältnis ist und bei Überzahl der »Einsen« positiv bzw. bei Überzahl der »Nullen« negativ ist.

Die so erzeugte Gleichspannung, die in der Additionsschaltung 2 (Fig. 1) dem Ausgangssignal des Empfangsnetzwerks 1 zuaddiert wird, bewirkt, daß der Amplitudenentscheider 3 auch bei sehr langen »Null«- oder »Eins«-Folgen sicher das Eingangssignal erkennt.

Dabei ist es unerheblich, daß ein Regenerator mit der erfindungsgemäß zusätzlichen Rückkopplung 8 nicht beliebig lange »Null«- oder »Eins«-Folgen des Binärsignals regenerieren kann, da in diesem Fall ohnehin die Taktrückgewinnungsschaltung 6 ausfallen würde und somit der Regenerator schon aus diesem Grunde nicht mehr funktionsfähig wäre.

**Patentansprüche**

1. Regenerator für gleichstrombehaftete Digitalsignale mit einem Amplitudenentscheider (3), einem nachgeschalteten Zeitentscheider (4) und einem daran angeschlossenen Rückkopplungsnetzwerk (7), das an eine vor dem Amplitudenentscheider (3) angeordnete Additionsschaltung (2) wechselstrommäßig angekoppelt ist, dadurch gekennzeichnet, daß dem Rückkopplungsnetzwerk (7) ein zusätzliches Rückkopplungsnetzwerk (8) parallelgeschaltet ist, das an die Additionsschaltung (2) galvanisch und an den Zeitentscheider (4) wechselstrommäßig angekoppelt ist, und eine Spannung liefert, die der Anzahl der aufeinanderfolgenden Zeichen gleicher Polarität entspricht, derart, daß die bei der Übertragung sehr langer Folgen von Zeichen gleicher Polarität auftretenden Spektralanteile sehr niedriger Frequenzen selektiv zurückgewonnen werden.

2. Regenerator nach Anspruch 1, dadurch gekennzeichnet, daß das zusätzliche Rückkopplungsnetzwerk (8) Dioden (10, 11) enthält, welche die vom Zeitentscheider (4) negiert entnommenen Zeichen unterschiedlicher Polarität getrennt gleichrichten, und Widerstände (12, 13) enthält, welche die von den Dioden (10, 11) erzeugten Gleichspannungen addieren.

## Claims

1. A regenerator for digital signals which have a d.c. component, comprising an amplitude decision circuit (3), a subsequent time decision circuit (4) and, connected thereto, a feedback network (7) which is a.c. coupled to an adder circuit (2) preceding the amplitude decision circuit (3), characterized in that arranged in parallel with said feedback network (7) there is an additional feedback network (8), which is d.c. coupled to the adder circuit (2) and a.c. coupled to the time decision circuit (4) and which produces a voltage corresponding to the number of characters of the same polarity such that the very low-frequency spectral components occurring during transmission of very long sequences of characters of the same polarity are selectively recovered.

2. A regenerator as claimed in Claim 1, characterized in that the additional feedback network (8) comprises diodes (10, 11) which separately rectify the characters having different polarities and being invertedly derived from the time decision circuit (4), the feedback network further comprising resistors (12, 13) which add together the d.c. voltages produced by the diodes (10, 11).

## Revendications

1. Régénérator pour des signaux numériques ayant une composante de courant continu comportant un discriminateur d'amplitude (3) suivi d'un discriminateur de temps (4) et un montage de rétrocouplage (7) qui y est connecté et qui est couplé en courant alternatif à un circuit d'addition (2) précédent le discriminateur d'amplitude (3) caractérisé en ce qu'un montage de rétrocouplage supplémentaire (8) connecté en parallèle au dit montage de rétrocouplage (7), est couplé par voie galvanique au circuit d'addition (2) et a courant alternatif au discriminateur de temps (4) et fournit une tension qui correspond au nombre des caractères successifs de même polarité d'une manière telle que les composantes spectrales de très basse fréquence apparaissant lors de la transmission de très longues séquences de caractères de même polarité soient récupérées sélectivement.

2. Régénérateur suivant la revendication 1, caractérisé en ce que le montage de rétrocouplage supplémentaire (8) comporte des diodes (10, 11) qui redressent séparément les caractères de polarités différentes reçus inversés du discriminateur de temps (4) et comporte des résistances (12, 13) qui additionnent les tensions continues produites par les diodes (10, 11).

Fig. 1